# EUROPÄISCHE PATENTSCHRIFT

(11) **EP 3 828 003 B1**
(45) Veröffentlichungstag und Bekanntmachung des Hinweises auf die Patenterteilung: **11.05.2022**
(21) Anmeldenummer: 21151732.1
(22) Anmeldetag: 03.02.2017
(51) Int. Cl.: B44C 5/04, B05D 3/06, E04F 15/10, B05D 1/40, B05D 1/36, B05D 7/00, B05D 7/04, B29C 71/02, B29K 27/06

(54) **PVC-KUNSTSTOFFPANEEL**
PVC PLASTIC PANEL
PANNEAU DE MATIÈRE PLASTIQUE PVC

(43) Veröffentlichungstag der Anmeldung: 02.06.2021
(62) Teilanmeldung aus: 17703400.6
(73) Patentinhaber: Xylo Technologies AG, 9052 Niederteufen (CH)
(72) Erfinder: DÖHRING, Dieter, 01561 Großenhain (DE)
(74) Vertreter: Bardehle Pagenberg Partnerschaft mbB Patentanwälte Rechtsanwälte

(56) Entgegenhaltungen:
- WO-A1-2008/061791
- WO-A1-2014/202144
- DE-A1-102010 011 602
- FR-A1- 2 805 548
- US-A1- 2011 296 780

## Beschreibung

### 1. Gebiet der Erfindung

Die vorliegende Erfindung betrifft ein verbessertes Paneel, insbesondere ein Wand-, Decken, oder Fußbodenpaneel, basierend auf einer Trägerplatte aus einem harten PVC (PVC-U), sowie ein Verfahren zu dessen Herstellung.

### 2. Hintergrund der Erfindung

Polyvinylchlorid wird seit langem zur Herstellung von Fußbodenbelägen verwendet. Polyvinylchlorid (PVC) ist ein thermoplastischer Werkstoff, der ohne die Zugabe von Hilfsstoffen hart und spröde ist. Die mechanischen Eigenschaften von PVC lassen sich jedoch durch die Zugabe geeigneter Hilfsstoffe, wie etwa Weichmacher, Füllstoffe, Färbemittel, Stabilisatoren, etc. in einem weiten Bereich einstellen. Aus diesem Grund wird hierin unter dem Begriff "PVC" kein reines Polyvinylchlorid verstanden, sondern PVC mit den üblicherweise hinzugefügten und für den praktischen Einsatz notwendigen Hilfsstoffen, sofern keine anderen Angaben gemacht werden.

Ein typisches Beispiel aus dem Stand der Technik ist in der Druckschrift DE 10 2006 058 655 A1 beschrieben. In dieser Druckschrift wird ein Bodenpaneel in der Form eines mehrschichtigen, rechteckigen Laminats mit einer Trägerplatte aus einem weichem Polyvinylchlorid und einer auf der Polyvinylchloridschicht angeordneten Dekorpapierschicht offenbart. Die Aufbringung einer Dekorpapierbahn ist technisch aufwendig und mit erheblichen Kosten verbunden.

Aus der DE 10 2006 029 963 A1 ist ein Bodenbelag aus Polyvinylchlorid bekannt, der mit einer strapazierfähigen Lackschicht beschichtet ist, um die Haltbarkeit des PVC-Bodenbelags zu verbessern. Die Lackschicht basiert auf einem Acrylatharz und soll mittels Strahlung ausgehärtet werden. Der Kern dieser Druckschrift liegt in der Zugabe von elektrisch leitfähigen Substanzen in das Acrylatharz, um den fertigen Bodenbelag mit antistatischen und/oder elektrisch leitenden Eigenschaften zu versehen.

Die WO 2008/061791 A1 desselben Anmelders stellt eine Weiterentwicklung einer Lackbeschichtung dar. Der Inhalt dieser Druckschrift wird hiermit durch in Bezugnahme vollständig aufgenommen. Der Kern der Verbesserung dieser Druckschrift liegt darin, dass auf die Oberfläche eines Paneels zwei flüssige, unterschiedliche Polymerschichten Nass-in-Nass aufgetragen werden, so dass eine teilweise Vermischung der Beschichtungsmittel stattfindet. Diese beiden Nass-in-Nass aufgetragenen Schichten werden dann gemeinsam ausgehärtet, wobei die ausgehärtete resultierende Beschichtung aufgrund der teilweisen Durchmischung einen Härtegradient aufweist, wobei die Härte der Beschichtung mit zunehmender Tiefe von der Oberfläche der resultierenden Beschichtung her gesehen abnimmt.

Im Lichte dieser bekannten PVC Beläge stellt sich die vorliegende Erfindung die Aufgabe, ein Paneel, insbesondere ein Wand-, Decken- oder Fußbodenpaneel bereitzustellen, das eine Trägerplatte aus einem (insbesondere) Hart-PVC umfasst, wobei ein solches kostengünstiger und auf einfachere Weise hergestellt werden soll als dies beispielsweise aus der DE 10 2006 058 655 A1 bekannt ist. Eine weitere Aufgabe liegt in der Bereitstellung eines derartigen Paneels, dass eine verbesserte Haltbarkeit und qualitativ besonders hochwertige dekorative Muster aufweist.

Die Druckschrift DE 10 2010 011 602 A1 offenbart ein Verfahren bei welchem die Trägerplatte zunächst auf einer Seite oder beidseitig mit einer Kunststofffolie kaschiert wird. Die kaschierte Trägerplatte wird einem Drucker zugeführt und die Platte mit Bildern oder Grafikmustern bedruckt, wobei die Tinte dann mittels UV-Strahlung gehärtet wird. Dann wird die fertig bedruckte Platte aus dem Drucker entnommen und in Fächerregalen zur Weiterverarbeitung zwischengelagert. Danach wird die bedruckte Trägerplatte mit einem ein- oder mehrschichtigen UV härtbaren Lack versehen.

Diese und andere Aufgaben, die beim Lesen der vorliegenden Beschreibung noch genannt werden oder vom Fachmann erkannt werden können, werden mit einem Paneel nach Anspruch 1 und einem Verfahren zu dessen Herstellung nach Anspruch 18 gelöst.

### 3. Ausführliche Beschreibung der Erfindung.

Gemäß der vorliegenden Erfindung wird ein Paneel bereitgestellt, das eine Trägerplatte basierend auf Polyvinylchlorid und einer darauf befestigten Folie umfasst, wobei die Folie eine PVC-Folie mit einer Stärke von 0,04 bis 0,2 mm ist und ein darauf direkt aufgedrucktes dekoratives Muster umfasst und über der PVC-Folie eine ausgehärtete Polymerschicht vorgesehen ist. Die Polymerschicht basiert dabei generell bevorzugt auf einem polymerisierbaren Harz, wie insbesondere einem Acrylatharz. Generell bevorzugt weist die ausgehärtete Polymerschicht einen Härtegradienten auf gemäß der eingangs beschriebenen WO 2008/061791 desselben Anmelders.

Die Trägerplatte basierend auf Polyvinylchlorid besteht grundsätzlich vorzugsweise aus Hart-PVC (auch als PVC-U bezeichnet), d.h. sie umfasst im Wesentlichen keine bzw. keine Weichmacher.

Im Unterschied zum eingangs genannten Stand der Technik DE 10 2006 058 655 A1 stellt die vorliegende Erfindung ein Paneel bereit, das kein separates Dekorpapier erfordert, da das dekorative Muster direkt auf die PVC-Folie gedruckt wird. Die PVC-Folie hat den Vorteil, dass auf aufwendige Vorbehandlungen der Trägerplatte verzichtet werden kann (obwohl Vorbehandlungen selbstverständlich möglich sind, sollte dies gewünscht sein). Insbesondere kann auf ein aufwendiges Schleifen der Oberfläche der Trägerplatte verzichtet werden und das Auftragen von Spachtelmasse und Grundierung, wie es im Stand der Technik typischerweise notwendig ist, kann bei Verwendung einer PVC-Folie in der erfindungsgemäßen Dicke ebenfalls vorteilhaft entfallen.

In einer bevorzugten Ausführungsform weist die Polymerschicht einen Härtegradienten auf, so dass die Härte der Polymerschicht mit zunehmender Tiefe von der Oberfläche der Polymerschicht her gesehen im Wesentlichen kontinuierlich abnimmt. Eine derartige Schicht mit Härtegradient wirkt vorteilhaft mit der relativ weichen PVC-Folie zusammen und erreicht unter anderem eine gute Schalldämmung.

Die zum Drucken des dekorativen Musters verwendete Druckfarbe ist lösungsmittelhaltig und eine UV-Druckfarbe. Derartige Druckfarben lösen die Oberfläche der PVC-Folie leicht an, wodurch es zu einer festen Verankerung der Druckfarbe auf der Folie kommt. Auch bei Verwendung von UV-Tinten kommt es zu einer sehr guten Vernetzung der Tinte mit der Oberfläche der PVC-Folie. UV-Tinten werden daher besonders bevorzugt, da sie Reaktivlösungsmittel enthalten, die chemisch in das spätere Netzwerk eingebaut werden, wie beispielsweise N-Vinylcaprolactam.

Bevorzugt wird zum Drucken des dekorativen Musters daher eine polymerisierbare Druckfarbe (Tinte) verwendet, insbesondere basierend auf polymerisierbaren Acrylatharzen und/ oder N-Vinylcaprolactam (eines flüssigen Reaktivverdünners), wie er von der BASF angeboten wird. Die Anmelder haben überraschend festgestellt, dass verbesserte Hafteigenschaften des Schichtsystems erreicht werden können, wenn nicht die üblichen wasserbasierten Dispersionsfarben verwendet werden, sondern stattdessen polymerisierbare Druckfarben verwendet werden. Dies gilt insbesondere bei der bevorzugten Anwendung mit einer Polymerschicht, insbesondere mit Härtegradient. Als geeignete Gewichtsanteile für die Menge an polymerisierbarem Acrylat und N-Vinylcaprolactam in der Druckfarbe haben sich 2 bis 50, mehr bevorzugt 5 bis 40 und am meisten bevorzugt von 10 bis 30 % erwiesen. Diese Angaben beziehen sich auf die Summe von Acrylat und N-Vinylcaprolactam. Der Gewichtsanteil des N-Vinylcaprolactam in der Druckfarbe beträgt zweckmäßig bspw. 3 bis 12 %.

Der positive Effekt ist besonders ausgeprägt, wenn die Druckfarbe der Dekorschicht (d.h. des dekorativen Musters) und die Polymerschicht gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Unter Aushärtung einer Polymerschicht beziehungsweise einer polymerisierbaren Druckfarbe (wie polymerisierbare Acrylate bzw. UV-reaktive Farben im Allgemeinen) wird hierin die chemische Reaktion verstanden, die bei der Polymerisation stattfindet. Durch die gemeinsame Aushärtung (Polymerisation) der polymerisierbaren Bestandteile (Acrylatsysteme und/oder N-Vinylcaprolactam) von Druckfarbe und Polymerschicht erfolgt eine chemische Vernetzung an der Grenzfläche der beiden Schichten, von der angenommen wird, dass sie für die verbesserte Haftung der Schichten verantwortlich ist.

Polymerisierbare Bestandteile wie sie bei der vorliegenden Erfindung bevorzugt zum Einsatz kommen umfassen als Hauptbestandteile Acrylate, wie insbesondere AcrylatMonomere, -Oligomere und optional Fotoinitiatoren aber auch N-Vinylcaprolactam als flüssigen Reaktivverdünner. N-Vinylcaprolactam kann der Druckfarbe zusätzlich zu den Acrylaten als Verdünner zugegeben werden und polymerisiert zusammen mit diesen aus. Alternativ ist es auch möglich auf die Acrylate zu verzichten und eine entsprechend größere Menge an N-Vinylcaprolactam vorzusehen, da das N-Vinylcaprolactam selbst polymerisiert werden kann. Details hierzu sind dem Fachmann beispielhaft aus der deutschen Veröffentlichungsschrift DE 197 02 476 A1 bekannt. In bevorzugten Ausführungsformen bestehen die polymerisierbaren Bestandteile daher im Wesentlichen aus N-Vinylcaprolactam. Die Fotoinitiatoren bewirken unter Einwirkung von Strahlung eine Polymerisation der Monomere bzw. Oligomere, wodurch die Druckfarbe schnell aushärtet.

Vorzugsweise hat die PVC-Folie eine Stärke von 0,05 bis 0,15 mm, mehr bevorzugt von 0,06 bis 0,095 mm. Derartige Stärken (Dicken) lassen sich sehr gut verarbeiten und insbesondere gut mit einem Kalander aufbringen. Beispielsweise kann die PVC-Folie direkt mittels eines beheizten Kalanders aufgebracht werden, so dass es zu einer thermischen Verbindung/Verschmelzung der Folie mit der Trägerplatte kommt. Die Verwendung eines zusätzlichen Klebstoffs zum Befestigen der Folie auf der Trägerplatte bedarf es dann nicht, obwohl dies alternativ oder zusätzlich natürlich möglich ist.

Die Trägerplatte basierend auf Polyvinylchlorid hat eine Dichte von 900 bis 2.500 kg/m³, vorzugsweise 1.000 bis 2.200 kg/m³, mehr bevorzugt von 1.300 bis 1.950 kg/m³ und am meisten bevorzugt von 1.350 bis 1.500 kg/m³. Derartige Dichten ergeben sehr robuste und widerstandsfähige Platten, die insbesondere bei der Verwendung der Paneele als Fußbodenbelag vorteilhaft sind. Außerdem erlauben diese Platten die Einarbeitung von Verriegelungs- oder Kopplungselementen an den Seitenkanten der Platte, um bspw. mehrere gleichartige Platten miteinander formschlüssig verbinden zu können.

Als vorteilhaft hat sich eine Dicke (Stärke) für die Trägerplatte zwischen 3 und 20 mm, bevorzugt zwischen 4 und 15 mm, mehr bevorzugt zwischen 3 und 12 mm und am meisten bevorzugt zwischen 4 und 10 mm erwiesen. Es hat sich herausgestellt, dass diese Bereiche für die Dicken der Trägerplatte eine ausreichende Stabilität während des Herstellungsverfahrens bereitstellen und darüber hinaus eine ausreichend hohe Trittschallabsorption (bei Verwendung als Fußbodenbelag) und Formstabilität des fertigen Paneels bieten.

In einer bevorzugten Ausführungsform ist auf der PVC-Folie eine Schicht umfassend einen UV-Primer vorgesehen. Diese Schicht hat bevorzugt eine Flächenmasse von 1 bis 20 g/m², mehr bevorzugt 2 bis 15 g/m², und am meisten bevorzugt von 2 bis 5 g/m² auf. Als geeignetes Material hat sich Dipropylenglycoldiacrylat erwiesen, dass bspw. in einer Menge von 2 g/m² gute Wirkung erzielt. Der Primer wird vorzugsweise auf die Druckfarbe aufgetragen und verbessert so die Haftung zwischen Druckfarbe, Untergrund und der Polymerschicht. Es hat sich gezeigt, dass insbesondere in Bereichen mit wenig Druckfarbe die Haftung durch Verwendung des Primers verbessert wird.

Generell bevorzugt ist die Trägerplatte eine extrudierte PVC-Platte.

In einer bevorzugten Ausführungsform werden in die Polymerschicht abriebfeste Partikel, insbesondere Korundpartikel, mit einem mittleren Durchmesser von 10 bis 100 µm, bevorzugt 20 bis 80 µm, mehr bevorzugt 25 bis 70 µm und besonders bevorzugt von 30 bis 60 µm eingebettet. Durch die abriebfesten Partikel besteht die Möglichkeit, die Lebensdauer eines erfindungsgemäßen Paneels erheblich zu steigern. In einer bevorzugten Ausführungsform stellt das dekorative Muster, das auf die PVC-Folie direkt mittels eines Digitaldruckverfahrens aufgebracht wurde, die einzige Dekorschicht des erfindungsgemäßen Paneels dar, d.h. es sind keine weiteren Dekorpapiere oder Dekorfolien vorgesehen. Es besteht somit keine Notwendigkeit mehr ein separates Dekorpapier oder dergleichen vorzusehen, was zu einer erheblichen Kostenreduzierung und Verfahrensvereinfachung bei der Herstellung eines erfindungsgemäßen Paneels führt.

Wie eingangs erwähnt, ist gemäß einer bevorzugten Ausführungsform der Erfindung die Druckfarbe der Dekorschicht (des dekorativen Musters) gemeinsam mit der darüber aufgebrachten Polymerschicht ausgehärtet (polymerisiert), vorzugsweise durch eine gemeinsame Bestrahlung derselben. Hierdurch kommt es an der Grenzschicht zwischen der Druckfarbe und der darüber aufgebrachten Polymerschicht(en) teilweise zu einer chemischen Vernetzung der verwendeten Polymere. Es hat sich gezeigt, dass dabei eine besonders gute Haftung der Polymerschicht auf der Trägerplatte erreicht werden kann.

Gemäß der vorliegenden Erfindung wird weiterhin ein Verfahren zum Herstellen eines Paneels, insbesondere eines Wand-, Decken- oder Fußbodenpaneels bereitgestellt. Bei diesem Verfahren wird in einem ersten Arbeitsschritt (Schritt i) eine Trägerplatte basierend auf Polyvinylchlorid mit einer Dichte von 900 bis 2.500 kg/m³ bereitgestellt. Die Trägerplatte besteht vorzugsweise aus einem Hart-PVC. Auf diese Trägerplatte wird anschließend (ii) eine PVC-Folie mit einer Stärke von 0,04 bis 0,2 mm mittels eines Kalanders aufgetragen und danach (iii) ein dekoratives Muster auf die PVC-Folie gedruckt. Nach dem Aufdruck des dekorativen Musters auf die PVC-Folie wird eine flüssige erste Polymerschicht auf die Grundierungsschicht aufgetragen (iv). In einem weiteren Schritt wird die Polymerschicht, vorzugsweise gemeinsam mit der Druckfarbe, ausgehärtet (vi). Optional kann zumindest eine zweite Polymerschicht flüssig auf die noch feuchte erste Polymerschicht aufgetragen werden (v), so dass eine teilweise Vermischung der Beschichtungsmittel stattfindet. Die Aushärtung der Druckfarbe und der Polymerschicht(en) kann in einem Verfahrensschritt aber auch nacheinander in zwei separaten Verfahrensschritten erfolgen. Unter Härten oder Aushärtung einer Polymerschicht wird hierbei die chemische Reaktion verstanden, die bei der Polymerisation stattfindet. Hiervon zu unterscheiden ist das Trocknen derartiger Schichten, bei dem lediglich der Wassergehalt reduziert bzw. entfernt wird.

Vorzugsweise werden die Schritte (iv) bis (vi) so durchgeführt, dass die ausgehärtete Polymerschicht einen Härtegradient aufweist, wobei die Härte der Beschichtung mit zunehmender Tiefe von der Oberfläche der resultierenden Beschichtung her gesehen abnimmt. Dieser Prozess ist näher in der eingangs erwähnten WO 2008/061791 A1 beschrieben, so dass hier auf weitere Details verzichtet wird.

Vorzugsweise wird ein beheizter Kalander verwendet, derart, dass die PVC-Folie mit der Trägerschicht thermisch verschweißt wird. Auf diese Weise kann das Aufbringen und Befestigen der Folie einfach und sicher in einem Arbeitsschritt erfolgen.

Weiter bevorzugt imitiert das direkt aufgedruckte dekorative Muster eine Holz-, Stein-, oder Fliesenoberfläche. Die PVC-Folie is grundsätzlich bevorzugt unifarben oder weiß. Dies bietet eine gute Hintergrundfarbe für die meisten kommerziell verwendeten Dekore.

Im Folgenden soll die Erfindung anhand zweier nicht beschränkender Beispiele näher erläutert werden:
Beispiel 1 (nicht Teil der Erfindung, wobei die Druckfarbe lösungsmittelhaltig sein muss): "Paneel mit herkömmlichem indirekten Tiefdruck" Eine PVC-Trägerplatte mit einer Stärke von 4 mm wird zunächst über ein Walzenauftragswerk mit einem Primer auf Basis einer handelsüblichen wässrigen Acrylatdispersion versehen. In einem nächsten Schritt erfolgt das Glätten der PVC-Trägerplatte über ein Walzenauftragswerk mittels einer Spachtelmasse basierend auf einer hochgefüllten wässrigen Acrylatdispersion. Anschließend wird ein Druckgrund auf Basis einer mit Füllstoffen und Farbpigmenten versetzten wässrigen Acrylatdispersion mittels Gießverfahren appliziert. Nach jedem dieser Beschichtungsschritte erfolgt ein Zwischentrocknen bei Temperaturen zwischen 80 und 200 °C. Die so behandelten PVC-Träger werden einer Druckmaschine im Wesentlichen bestehend aus einer Gravurwalze und einer Gummiwalze für die Übertragung des Druckbildes vom Gravurzylinder auf die Platte zugeführt. Das Druckbild wird über 3 nachgeschaltete Druckwerke erzeugt, wobei durch jedes Druckwerk eine eigene Druckfarbe bestehend aus Farbpigmenten und einer wässrigen Acrylatdispersion aufgetragen wird. Bei einer Imitation eines dunklen Nußbaumholzes werden beispielsweise 5 g/m² Druckfarbe appliziert. Auf die Druckfarbenschicht wird im weiteren Prozess ein handelsüblicher UV-Primer über ein Walzenauftragswerk aufgetragen. Schließlich erfolgt der Auftrag der Polymerschicht wie in der WO 2008/061791 beschrieben, um eine Polymerschicht mit Härtegradient zu erzeugen.
**Beispiel 2**: "Paneele, bei denen das Muster auf eine PVC-Folie gedruckt wird" Es wird eine 6 mm starke PVC-Trägerplatte aus Hart-PVC verwendet und darauf eine PVC-Folie mit einer Dicke (Stärke) von 0,03 mm mittels eines beheizten Kalanders appliziert, so dass die Folie mit der Trägerplatte thermisch verschweißt wird. Auf die so befestigte PVC-Folie wird mittels Digitaldrucker das gleiche Dekorbild wie in Beispiel 1 erzeugt. Verwendung finden dabei jedoch eine lösungsmittelhaltige, UVstrahlenhärtende Digitaldruckfarbe. Für die Erzeugung des Druckbildes wird eine Farbmenge von etwa 2 g/m² benötigt. Die Farbe wird zunächst mit 150 mJ/cm² (Quecksilber) fixiert. Darauf erfolgt der Auftrag von 2 g/m² einer ersten UV-härtenden Schicht, die vorwiegend Dipropylenglycoldiacrylat enthält. Auf diese nicht bestrahlte Schicht wird ein doppelbindungshaltiges, mit Photoinitiatoren versetztes Oligomer aufgetragen. Der Verbund wird anschließend mit einer UV-Strahlenquelle bestrahlt und die polymerisierbaren Bestandteile ausgehärtet. Die daraus resultierende Polymerschicht umfasst die Druckfarbe und alle darüber liegenden Schichten.

### 4. Beschreibung von bevorzugten Ausführungsformen

Im Folgenden wird die Erfindung anhand der Figur näher erläutert, wobei:
Fig. 1 eine schematische Darstellung eines erfindungsgemäßen Paneels 10 mit einer Trägerplatte 12 aus Polyvinylchlorid zeigt; und
Fig. 2 eine Anlage zur Beschichtung in schematischer Ansicht zeigt.

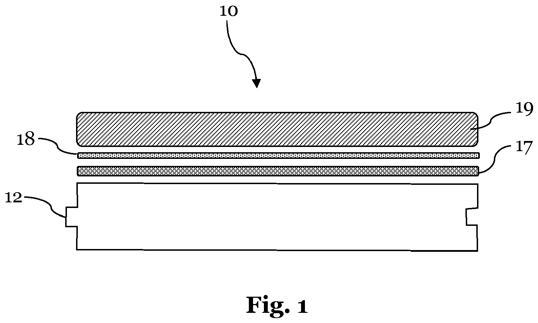

In Fig. 1 ist die Trägerplatte 12 gezeigt, die an ihren jeweiligen Kanten Feder-Nutverbindungen aufweist, die es erlauben einzelne Paneele 10 miteinander zu verbinden. Die Trägerplatte besteht aus einem extrudierten Hart-PVC (PVC-U).

Oberhalb der Trägerplatte 12 ist eine PVC-Folie 17 angeordnet. Auf der Oberseite der Folie 17 ist ein dekoratives Muster (Dekorschicht) 18 aufgedruckt, vorzugsweise mittels eines Digitaldruckverfahrens. Dieses dekorative Muster kann je nach Anwendung ein beliebiges Muster darstellen. Über PVC-Folie und Dekorschicht ist ein mittels UV-Bestrahlung aushärtbares Polymerschichtsystem 19 vorgesehen. Die Darstellung ist nicht maßstabsgetreu und die Schichten sind hier mit einem, im realen Produkt nicht vorhandenen, Abstand zueinander dargestellt, um sie klarer sichtbar zu machen.

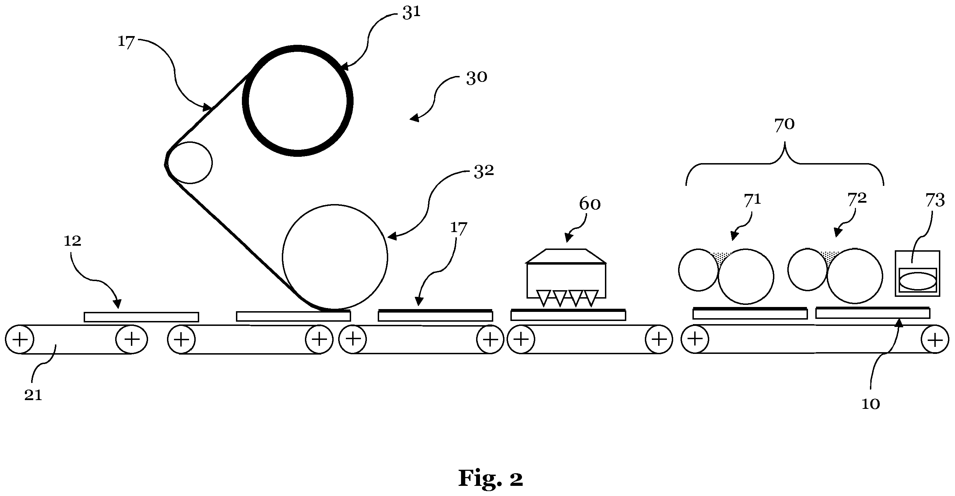

Im Folgenden soll anhand der Fig. 2 beispielhaft die Herstellung eines erfindungsgemäßen Paneels, bzw. das erfindungsgemäße Verfahren, beschrieben werden. Fig. 2 zeigt schematisch eine Beschichtungsanlage zur Beschichtung von Platten 12 bzw. zur Herstellung von Paneelen 10. Die Platten 12 sind bestehen aus Hart-PVC mit einer Dicke von 4-8 mm. Die Platten 12 werden über eine Rollenförderanlage 21 durch die verschiedenen Stationen der Beschichtungsanlage geführt. Die dargestellten Beschichtungsstationen sind nicht abschließend zu verstehen, sondern dienen nur beispielhaft der Erläuterung des erfindungsgemäßen Verfahrens und sind rein schematisch dargestellt. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachteln usw. Die erste Station 30 soll eine Kalander-Einheit darstellen, mit der die PVC-Folie 17 auf die Oberseite der Platten 12 appliziert wird. Die Folie wird von einer Zufuhrrolle 31 abgerollt und mittels einer beheizten KalanderWalze 32 auf der Oberseite der Platten 12 befestigt. Ein Zuschnitt der Folie erfolgt durch geeignete dem Fachmann grundsätzlich bekannte Schneidmittel (nicht dargestellt).

In Station 60 wird mittels eines Digitaldrucks ein dekoratives Dekor, wie insbesondere ein Echtholzdekor, auf die PVC-Folie 17 aufgedruckt. Nach dem Druck wird in der Beschichtungsstation 70 eine Polymerschicht aufgetragen. Die Polymerschicht wird mit einem Härtegradienten aufgetragen, so dass die Härte der Polymerschicht mit zunehmender Tiefe von der Oberfläche der Polymerschicht her gesehen im Wesentlichen kontinuierlich abnimmt. Zu diesem Zweck wird in einer ersten Beschichtungseinheit 71 eine erste Polymerschicht basierend auf einem polymerisierbaren Acrylatsystem aufgetragen. Auf diese erste Polymerschicht wird in Station 72 eine weitere Polymerschicht Nass-in-Nass aufgetragen. Die zweite Polymerschicht weist beispielsweise einen höheren Doppelbindungsanteil auf, wie es im Detail in der oben erwähnten Anmeldung zum Härtegradienten beschrieben ist. Die beiden Polymerschichten werden in den Stationen 71 und 72 Nass-auf-Nass aufgetragen, so dass es an der Grenzfläche der beiden Schichten zu einer teilweisen Vermischung kommt. In Station 73 werden die beiden Polymerschichten unter Einwirkung von UV-Strahlung gemeinsam ausgehärtet.

Bevorzugt ist die Station 60 eine Digitaldruckstation und verwendet eine Druckfarbe basierend auf einem polymerisierbaren Acrylat. In diesem Fall ist es bevorzugt, dass zwischen den Stationen 60 und 70 keine Aushärtung der Druckfarbe stattfindet, sondern allenfalls ein Zwischentrocknungsschritt bei welchem Schritt dem polymerisierbaren Acrylat der Druckfarbe etwas Feuchtigkeit entzogen wird. In der Aushärtstation 73 werden dann die Druckfarbe und die ersten und zweiten Polymerschichten gemeinsam ausgehärtet, was zu einer besonders widerstandsfähigen Oberfläche führt.

## Patentansprüche

1. Paneel, insbesondere ein Wand-, Decken- oder Fußbodenpaneel, umfassend eine Trägerplatte (12) basierend auf Polyvinylchlorid und einer darauf befestigten Folie (17), wobei
die Folie (17) eine PVC-Folie mit einer Stärke von 0,04 bis 0,2 mm ist und ein darauf direkt aufgedrucktes dekoratives Muster (18) umfasst und über der PVC-Folie eine ausgehärtete Polymerschicht (19) vorgesehen ist,
**dadurch gekennzeichnet, dass**
die zum Drucken des dekorativen Musters (18) verwendete Druckfarbe lösungsmittelhaltig ist und eine UV-Druckfarbe ist, wobei die Druckfarbe konfiguriert ist die Oberfläche der PVC-Folie leicht anzulösen.

2. Paneel nach Anspruch 1, **dadurch gekennzeichnet, dass** die Polymerschicht (19) einen Härtegradienten aufweist, so dass die Härte der Polymerschicht mit zunehmender Tiefe von der Oberfläche der Polymerschicht her gesehen im Wesentlichen kontinuierlich abnimmt, wobei die Druckfarbe ein polymerisierbares Acrylat enthalten kann und/oder N-Vinylcaprolactam.

3. Paneel nach Anspruch 2, **dadurch gekennzeichnet, dass** die zum Drucken des dekorativen Musters (18) verwendete Druckfarbe ein polymerisierbares Acrylat enthält und N-Vinylcaprolactam enthält in einem Gewichtsanteil (%) in der Druckfarbe von 2 bis 50, mehr bevorzugt 5 bis 40 und am meisten bevorzugt von 10 bis 30 %.

4. Paneel nach einem der vorhergehenden Ansprüche, **dadurch gekennzeichnet, dass** die Druckfarbe und die Polymerschicht gemeinsam ausgehärtet wurden, vorzugsweise durch Strahlung.

5. Paneel nach einem der vorhergehenden Ansprüche, **dadurch gekennzeichnet, dass** das dekorative Muster (18) im Digitaldruck aufgebracht wurde, wobei die PVC-Folie eine Stärke von 0,05 bis 0,15 mm haben kann, mehr bevorzugt von 0,06 bis 0,095 mm, wobei die Trägerplatte (12) eine Dicke zwischen 3 und 20 mm, bevorzugt zwischen 4 und 15 mm, mehr bevorzugt zwischen 3 und 12 mm und am meisten bevorzugt zwischen 4 und 10 mm aufweisen kann, wobei auf der PVC-Folie (17) eine Schicht umfassend einen UV-Primer vorgesehen sein kann.

6. Paneel nach dem vorhergehenden Anspruch, **dadurch gekennzeichnet, dass** die Schicht umfassend einen UV-Primer (14) eine Flächenmasse zwischen 1 bis 15 g/m², bevorzugt mit einer Flächenmasse zwischen 1,5 bis 10 g/m², besonders bevorzugt mit einer Flächenmasse zwischen 2 und 5 g/m².

7. Paneel nach einem der vorhergehenden Ansprüche, **dadurch gekennzeichnet, dass** die Trägerplatte (12) eine extrudierte PVC-Platte ist, wobei die PVC-Folie (17) mit der Trägerplatte thermisch verschweißt ist oder verklebt sein kann, wobei die PVC-Folie (17) unifarben ist und insbesondere weiß sein kann.

8. Paneel nach einem der vorhergehenden Ansprüche, **dadurch gekennzeichnet, dass** in der Polymerschicht abriebfeste Partikel vorgesehen sind, wobei die abriebfesten Partikel vorzugsweise einen mittleren Durchmesser von 10 bis 150 µm, bevorzugt 20 bis 80 µm, mehr bevorzugt 25 bis 70 µm und besonders bevorzugt von 30 bis 60 µm aufweisen und weiter bevorzugt aus Korund bestehen.

9. Paneel nach einem der vorhergehenden Ansprüche, **dadurch gekennzeichnet, dass** die Polymerschicht (19) auf einem oder mehreren der folgenden Acrylate basiert: 1,6-Hexandioldiacrylat, Polyesteracrylat, Polyurethanacrylsäureester und Dipropylenglycoldiacrylat.

10. Paneel nach einem der vorhergehenden Ansprüche, **dadurch gekennzeichnet, dass** neben dem dekorativen Muster (18) auf der PVC-Folie (17) keine weitere Dekorschichten, insbesondere kein Dekorpapier oder Dekorfolie angebracht sind.

11. Verfahren zur Herstellung eines Paneels, insbesondere eines Wand-, Decken- oder Fußbodenpaneels, umfassend folgende Schritte in der angegebenen Reihenfolge:
(i) Bereitstellen einer Trägerplatte basierend auf Polyvinylchlorid mit einer Dichte von 900 bis 2.500 kg/m³;
(ii) Aufbringen einer PVC-Folie mit einer Stärke von 0,04 bis 0,2 mm auf die Trägerplatte mittels eines Kalanders;
(iii) Aufdrucken eines dekorativen Musters direkt auf die PVC-Folie, wobei die zum Drucken des dekorativen Musters (18) verwendete Druckfarbe lösungsmittelhaltig ist und eine UV-Druckfarbe ist, wobei die Druckfarbe die Oberfläche der PVC-Folie leicht anlöst;
(iv) Auftragen zumindest einer ersten Polymerschicht auf die PVC-Folie;
(v) optional: Auftragen zumindest einer zweiten flüssigen Polymerschicht auf die noch feuchte erste Polymerschicht, so dass eine teilweise Vermischung der Polymerschichten stattfindet; und
(vi) Härten der Polymerschicht(en).

12. Verfahren nach Anspruch 11, **dadurch gekennzeichnet, dass** die Schritte (iv) bis (vi) so durchgeführt werden, dass die ausgehärtete Polymerschicht einen Härtegradient aufweist, wobei die Härte der Beschichtung mit zunehmender Tiefe von der Oberfläche der resultierenden Beschichtung her gesehen abnimmt.

13. Verfahren nach einem der vorhergehenden Verfahrensansprüchen, **dadurch gekennzeichnet, dass** die Trägerplatte durch Extrusion hergestellt wird, wobei in Schritt (ii) ein beheizter Kalander verwendet werden kann, derart, dass die PVC-Folie mit der Trägerplatte thermisch verschweißt wird, wobei das dekorative Muster mittels Digitaldruck direkt auf die PVC-Folie aufgedruckt werden kann, wobei die PVC-Folie eine Stärke von 0,05 bis 0,15 mm haben kann, mehr bevorzugt von 0,06 bis 0,095 mm.

14. Paneel oder Verfahren nach einem der vorhergehenden Ansprüche, **dadurch gekennzeichnet, dass** das die Trägerplatte (12) basierend auf Polyvinylchlorid eine Dichte von 900 bis 2.500 kg/m³ hat, vorzugsweise 1.000 bis 2.200 kg/m³, mehr bevorzugt von 1.300 bis 1.950 kg/m³ und am meisten bevorzugt von 1.350 bis 1.500 kg/m³.

15. Paneel oder Verfahren nach einem der vorhergehenden Ansprüche, **dadurch gekennzeichnet, dass** das direkt aufgedruckte dekorative Muster eine Holz-, Stein-, oder Fliesenoberfläche imitiert, wobei die Trägerplatte (12) basierend auf Polyvinylchlorid keine Weichmacher enthalten muss, wobei die Trägerplatte (12) basierend auf Polyvinylchlorid aus Hart-PVC (PVC-U) bestehen kann.

## Claims

1. A panel, in particular a wall, ceiling or floor panel, comprising a carrier plate (12) based on polyvinyl chloride and a film (17) attached thereon, wherein the film (17) is a PVC film having a thickness of 0.04 to 0.2 mm and comprises a decorative pattern (18) directly printed thereon, and a cured polymer layer (19) is provided over the PVC film, **characterized in that** the ink used for printing the decorative pattern (18) is solvent-containing and is a UV ink, wherein the printing ink is configured to slightly dissolve the surface of the PVC film.

2. The panel according to claim 1, **characterized in that** the polymer layer (19) has a hardness gradient, so that the hardness of the polymer layer essentially decreases continuously with increasing depth as seen from the surface of the polymer layer, wherein the printing ink may contain a polymerizable acrylate and/or N-vinylcaprolactam.

3. The panel according to claim 2, **characterized in that** the ink used for printing the decorative pattern (18) contains a polymerizable acrylate and N-vinylcaprolactam in a weight proportion (%) of 2 to 50, more preferably 5 to 40, and most preferably 10 to 30 %, in the printing ink.

4. The panel according to one of the preceding claims, **characterized in that** the printing ink and the polymer layer were cured together, preferably by radiation.

5. The panel according to one of the preceding claims, **characterized in that** the decorative pattern (18) was applied by means of digital printing, wherein the PVC film may have a thickness of 0.05 to 0.15 mm, more preferably from 0.06 to 0.095 mm, wherein the carrier plate (12) may have a thickness between 3 and 20 mm, preferably between 4 and 15 mm, more preferably between 3 and 12 mm, and most preferably between 4 and 10 mm, wherein a layer comprising a UV primer may be provided on the PVC film.

6. The panel according to the preceding claim, **characterized in that** the layer comprising a UV primer (14) has a grammage between 1 and 15 g/m², preferably a grammage between 1.5 and 10 g/m², particularly preferred a grammage between 2 and 5 g/m².

7. The panel according to one of the preceding claims, **characterized in that** the carrier plate (12) is an extruded PVC plate, wherein the PVC film (17) may be glued or thermally welded to the carrier plate, wherein the PVC film may be unicolored and in particular white.

8. The panel according to one of the preceding claims, **characterized in that** abrasion-resistant particles are provided in the polymer layer, wherein the abrasion-resistant particles preferably have an average diameter of 10 to 150 µm, preferably 20 to 80 µm, more preferably 25 to 70 µm and particularly preferred of 30 to 60 µm and further preferred consist of corundum.

9. The panel according to one of the preceding claims, **characterized in that** the polymer layer (19) is based on one or more of the following acrylates: 1,6-hexanedioldiacrylate, polyester acrylate, polyurethane acrylic acid ester and dipropylene glycol diacrylate.

10. Panel according to one of the preceding claims, **characterized in that,** besides the decorative pattern (18) on the PVC film (17), no further decor layers, in particular no decor papers or decor films are provided.

11. A method for manufacturing a panel, in particular a wall, ceiling or floor panel, comprising the following steps in the given order:
(i) Providing a carrier plate based on polyvinyl chloride with a density of 900 to 2,500 kg/m3;
(ii) Applying a PVC film having a thickness of 0.04 to 0.2 mm to the carrier plate by means of a calender;
(iii) Printing a decorative pattern directly on the PVC film, wherein the printing ink used for printing the decorative pattern (18) is solvent-containing and a UV printing ink, wherein the printing ink slightly dissolves the surface of the PVC film;
(iv) Applying at least a first polymer layer onto the PVC film;
(v) Optional: applying at least a second liquid polymer layer onto the still moist first polymer layer so that a partial mixing of the polymer layers occurs; and
(vi) Curing of the polymer layer(s).

12. The method according to claim 11, **characterized in that** the steps (iv) to (vi) are performed such that the cured polymer layer has a hardness gradient, wherein the hardness of the coating decreases with increasing depth as seen from the surface of the resulting coating.

13. The method according to one of the preceding method claims, **characterized in that** the carrier plate is manufactured by extrusion, wherein in step (ii) a heated calender may be used in such a way that the PVC film is thermally welded to the carrier plate, wherein the decorative pattern may be directly printed on the PVC film by means of digital printing, wherein the PVC film may have a thickness of 0.05 to 0.15 mm, more preferably of 0.06 to 0.095 mm.

14. The panel or method according to one of the preceding claims, **characterized in that** the carrier plate (12) based on polyvinyl chloride has a density of 900 to 2,500 kg/m³, preferably of 1,000 to 2,200 kg/m³, more preferably of 1,300 to 1,950 kg/m³ and most preferably of 1,350 to 1,500 kg/m³.

15. The panel or method according to one of the preceding claims, **characterized in that** the directly printed decorative pattern imitates a wood, stone or tile surface, wherein the carrier plate (12) based on polyvinyl chloride may not contain plasticizers, wherein the carrier plate (12) based on polyvinyl chloride may consist of hard PVC (PVC-U).

## Revendications

1. Panneau, en particulier panneau mural, de plafond ou de plancher, comprenant une plaque support (12) à base de poly(chlorure de vinyle) et d'une feuille (17) fixée par-dessus, la feuille (17) étant une feuille de PVC ayant une épaisseur de 0,04 à 0,2 mm et comprenant un motif décoratif (18) directement imprimé par-dessus, et une couche polymère durcie (19) étant prévue par-dessus la feuille de PVC, **caractérisé en ce que** l'encre d'imprimerie utilisée pour l'impression du motif décoratif (18) est sans solvant et est une encre d'imprimerie UV, l'encre d'imprimerie étant configurée pour commencer à dissoudre légèrement la surface de la feuille de PVC.

2. Panneau selon la revendication 1, **caractérisé en ce que** la couche polymère (19) présente un gradient de dureté, de sorte que la dureté de la couche polymère diminue pour l'essentiel en continu quand augmente la profondeur à partir de la surface de la couche polymère, l'encre d'imprimerie pouvant contenir un acrylate polymérisable et/ou du N-vinylcaprolactame.

3. Panneau selon la revendication 2, **caractérisé en ce que** l'encre d'imprimerie utilisée pour l'impression du motif décoratif (18) contient un acrylate polymérisable et contient du N-vinylcaprolactame selon une proportion pondérale (%) dans l'encre d'imprimerie de 2 à 50, plus préférentiellement de 5 à 40 et tout spécialement de 10 à 30 %.

4. Panneau selon l'une des revendications précédentes, **caractérisé en ce que** l'encre d'imprimerie et la couche polymère sont durcies ensemble, de préférence sous l'effet d'un rayonnement.

5. Panneau selon l'une des revendications précédentes, **caractérisé en ce que** le motif décoratif (18) a été appliqué par impression numérique, dans lequel la feuille de PVC peut avoir une épaisseur de 0,05 à 0,15 mm, plus préférentiellement de 0,06 à 0,095 mm, dans lequel la plaque support (12) peut présenter une épaisseur entre 3 et 20 mm, de préférence entre 4 et 15 mm, plus préférentiellement entre 3 et 12 mm, et tout spécialement entre 4 et 10 mm, dans lequel une couche comprenant un primaire UV peut être prévue sur la feuille de PVC (17).

6. Panneau selon la revendication précédente, **caractérisé en ce que** la couche comprenant un primaire UV (14) présente une masse surfacique entre 1 et 15 g/m², de préférence une masse surfacique entre 1,5 et 10 g/m², d'une manière particulièrement préférée une masse surfacique entre 2 et 5 g/m².

7. Panneau selon l'une des revendications précédentes, **caractérisé en ce que** la plaque support (12) est une plaque en PVC extrudée, la feuille de PVC (17) pouvant être thermosoudée ou collée à la plaque support, la feuille de PVC (17) étant de couleur unie et pouvant en particulier être blanche.

8. Panneau selon l'une des revendications précédentes, **caractérisé en ce qu'il** est prévu des particules résistantes à l'abrasion dans la couche polymère, les particules résistantes à l'abrasion présentant de préférence un diamètre moyen de 10 à 150 µm, de préférence de 20 à 80 µm, plus préférentiellement de 25 à 70 µm et d'une manière particulièrement préférée de 30 à 60 µm, et en outre de préférence étant constituées de corindon.

9. Panneau selon l'une des revendications précédentes, **caractérisé en ce que** la couche polymère (19) est à base d'un ou plusieurs des acrylates suivants : diacrylate de 1,6-hexanediol, acrylate de polyester, ester d'acide polyuréthane-acrylique et diacrylate de dipropylèneglycol.

10. Panneau selon l'une des revendications précédentes, **caractérisé en ce que,** outre le motif décoratif (18), aucune autre couche décorative, en particulier aucun papier décoratif ni aucune feuille décorative, n'est appliqué sur la feuille de PVC (17).

11. Procédé de fabrication d'un panneau, en particulier d'un panneau mural, de plafond ou de plancher, comprenant les étapes suivantes dans l'ordre indiqué :
(i) obtention d'une plaque support à base de poly(chlorure de vinyle), ayant une masse volumique de 900 à 2 500 kg/m³ ;
(ii) application d'une feuille de PVC ayant une épaisseur de 0,04 à 0,2 mm sur la plaque support, à l'aide d'une calandre ;
(iii) impression d'un motif décoratif directement sur la feuille de PVC, l'encre d'imprimerie utilisée pour l'impression du motif décoratif (18) étant sans solvant et étant une encre d'imprimerie UV, l'encre d'imprimerie commençant à dissoudre légèrement la surface de la feuille de PVC ;
(iv) application d'au moins une première couche polymère sur la feuille de PVC ;
(v) éventuellement : application d'au moins une deuxième couche polymère liquide sur la première couche polymère encore humide de façon qu'il se produise un mélange partiel des couches polymères ; et
(vi) durcissement de la ou des couches polymères.

12. Procédé selon la revendication 11, **caractérisé en ce que** les étapes (iv) à (vi) sont mises en œuvre de telle sorte que la couche polymère durcie présente un gradient de dureté, la dureté du revêtement diminuant quand augmente la profondeur à partir de la surface du revêtement obtenu.

13. Procédé selon l'une des revendications de procédé précédentes, **caractérisé en ce que** la plaque support est fabriquée par extrusion, dans lequel, à l'étape (ii), on peut utiliser une calandre chauffante de façon à thermosouder la feuille de PVC à la plaque support, dans lequel le motif décoratif peut être directement imprimé sur la feuille de PVC par impression numérique, dans lequel la feuille de PVC peut avoir une épaisseur de 0,05 à 0,15 mm, plus préférentiellement de 0,06 à 0,095 mm.

14. Panneau ou procédé selon l'une des revendications précédentes, **caractérisé en ce que** la plaque support (12) à base de poly(chlorure de vinyle) a une masse volumique de 900 à 2500 kg/m³, de préférence de 1000 à 2200 kg/m³, plus préférentiellement de 1300 à 1950 kg/m³ et tout spécialement de 1350 à 1500 kg/m³.

15. Panneau ou procédé selon l'une des revendications précédentes, **caractérisé en ce que** le motif décoratif directement appliqué imite une surface de bois, de pierre ou de carrelage, dans lequel la plaque support (12) à base de poly(chlorure de vinyle) ne doit pas contenir de plastifiant, dans lequel la plaque support (12) à base de poly(chlorure de vinyle) peut être constituée de PVC rigide (PVC-U).
